# EUROPEAN PATENT SPECIFICATION

(11) **EP 2 547 918 B1**
(45) Date of publication and mention of the grant of the patent: **23.04.2014**
(21) Application number: 11712298.6
(22) Date of filing: 25.02.2011
(51) Int. Cl.: A47C 4/02, A47C 4/03, F16B 12/00, F16B 12/26

(54) **CONNECTOR ASSEMBLIES**
VERBINDERBAUGRUPPEN
ENSEMBLES RACCORDS

(30) Priority: 18.03.2010 GB 201004513
(43) Date of publication of application: 23.01.2013
(73) Proprietor: Seminar Components (UK) Limited, Swansea SA5 8JF (GB)
(72) Inventor: HALE, Richard, John, Swansea SA5 8JF (GB)
(74) Representative: Davies, Elliott
(86) International application number: PCT/GB2011/050375
(87) International publication number: WO 2011/114123

(56) References cited:
- EP-A2- 1 602 838
- WO-A1-2010/047836
- CH-A- 237 939
- DE-A1- 3 437 930

## Description

This invention relates to connector assemblies for slideably connecting removable parts of an object such as an adjustable chair, although the connector assembly according to the invention may be used for other suitable applications.

Connector assemblies are generally known, for example from EP 1 602 838 A2.

In EP1411801 B there is described an adjustable chair moveably mounted for relative vertical and tilting movement with respect to a chassis and which includes a pair of side walls preventing or inhibiting access from the side of the chair to the underside of the chair seat above the chassis, and between the chair seat and the side walls are a pair of planar arm rests removeably fixed to the chair body so that as the chair rises or falls or tilts forwards or backwards the armrests follow the movement of the chair. As with all such mechanical equipment it is often necessary to dismantle parts of the chair for repair or transport through the use of common fixings such as threaded fasteners which are therefore time consuming to assemble and disassemble.

For connecting ordinary domestic lounge chairs together to form e.g. a corner unit or a sofa it is common practice to use connector assemblies comprising tapered tangs connected to one side of the furniture element, the tang being insertable in a correspondingly shaped channelled bracket affixed to the other side of an adjacent chair element, so that they are easy to assemble into a rigid unit. A particular advantage of connector assemblies using tapered tangs and correspondingly shaped channelled brackets is that they are much easier to locate and connect to adjoining elements of furniture since the taper acts as a guide and can thus ensure connection between e.g. upholstered elements which would otherwise be blind due to the presence of the upholstery. However, more particularly in the case of adjustable chairs having e.g. upholstered elements requiring occasional replacement of armrests and side panels requiring occasional removal for servicing the actuating mechanism of the adjustable chair, it has been found that, for safety reasons, the angle of taper has to be relatively shallow, typically 5º to the vertical, so as to ensure that when the chair is tilted it remains in position even when occupied. This can lead to such a shallow-tapered tang becoming wedged within its respective bracket, thereby making it difficult to become disengaged and possibly leading to damage during attempted disengagement.

The present invention is derived from the realisation that, when connected, adjacent elements of furniture which are intended to be removable but which, in use, are also intended to move generally laterally along with e.g. the seat of a chair, are more safely connected by a tang having substantially parallel sides which may thereafter be releaseably secured in place adjacent to correspondingly shaped channel, but which also includes at or near its respective ends tapers to allow the tang to be easily located in a respective channel of substantially the same shape and to bear substantially vertical loads.

According to the invention there is provided a connector assembly comprising or including a tang adapted to be secured to a first element and a correspondingly shaped channelled bracket adapted to be secured to a second element, the tang being tapered bluntly inwardly at its leading end, being substantially parallel in its mid portion, and being tapered bluntly outwardly at its end remote from its leading end, the arrangement being such that the inwardly facing taper of the tang is adapted to be received initially within the outwardly tapered channelled bracket, which thereafter guides the tang into the channel up to the limit imposed by the presence of the outwardly extending part of the tang as it is received within the correspondingly shaped part of the bracket.

With this arrangement, the tang and hence bracket can have relatively blunt tapers i.e. not shallow, which bear the generally vertically imposed loads whilst still retaining the advantage of being able to guide the parallel sides of the tang, which bear the generally horizontally imposed loads, into the parallel-sided parts of the channel in the bracket. Hence, lateral or planar rocking movement between the first and second elements is substantially eliminated. In the event that the first element is required to be disconnected relative to the second element it may simply be slid along the major axis of the tang and channel with little or no risk of either being jammed with respect to the other as a result of the presence of the blunt tapers, which are preferably around 20º to the vertical relative to a vertically disposed connector assembly.

Conveniently, locking formations are provided on or in the tang or bracket by which the tang may be releasably secured to the bracket when the first and second elements are connected together. In particular, a spring clip forming part of the bracket may include a bore into which a correspondingly shaped stud on part of the tang, such as at or near its leading end may be received when the tang is fully inserted into the bracket, the arrangement being such that, for disassembly, part of the spring clip is simply lifted away from the tang and hence locking stud to thereafter release the tang for removal from the bracket by being slid along the major axis of the tang.

The invention also extends to furniture having one or more detachable parts interconnected by a connector assembly according to the invention.

The invention will now be described, by way of example only, with reference to the accompanying drawings in which:
Figure 1 is an exploded view of a connector assembly;
Figure 2 is a view of the connector assembly of Figure 1 in its assembled condition,
Figure 3 is a view of the assembly of Figure 2 incorporating locking formations in the form of a spring clip, and
Figure 4 is a view of the connector assembly of Figure 2 showing an alternative locking arrangement to that shown in Figure 3.

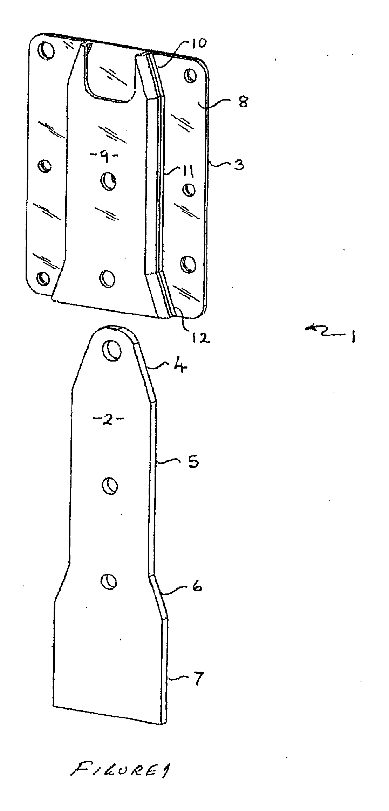

Referring firstly to Figure 1, a connector assembly according to this embodiment of the invention is shown generally at 1 and comprises a tang 2 and channelled bracket 3 for receiving the tang 2 in a manner to be described.

The tang 2 has a blunt inwardly tapered leading end 4 of around 20º to the vertical, a mid portion 5 having substantially parallel sides and a blunt outwardly tapered lower end 6, also around 20º to the vertical, extending from a fixing plate 7 by which the tang 2 may be secured to a first element of e.g. furniture (not shown).

The channelled bracket 3 comprises a back plate 8 onto which is secured by e.g. welding a tang-receiving channel or sleeve 9 having inwardly tapering neck portions 10 at its upper end, a parallel-sided mid portion 11 and an outwardly tapering lower end shoulder portions 12.

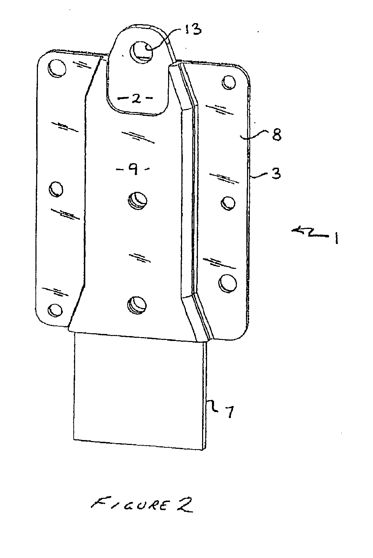

Figure 2 shows the tang 2 fully inserted into the slot or channel 9, in which position it will be apparent that if the fixing plate 7 at the end of the tang 2 is secured to a first element, such as the armrest of a reclining chair, and the back plate 8 of the channelled bracket 3 is fixed to a second element, such as the seat portion of an adjustable chair, they will each be releaseably secured with respect to each other and, by virtue of the presence of the parallel-sided mid portion 5 of the tang 2 and the parallel-sided mid portion of the slot or channel 9 there will be substantially no rocking movement in the event that either is tilted relative to the other. At the same time, by virtue of the existence of the inwardly tapered leading end 4 of the tang 2 and the outwardly tapered lower end shoulders portions 12 of the sleeve or channel 9 they collectively cooperate to enable the tang 2 to be easily guided into firm engagement with the bracket 3 within the sleeve or channel 9 up to the limit imposed by the inwardly tapering neck portions 10 and the outwardly tapering shoulder portions 12.

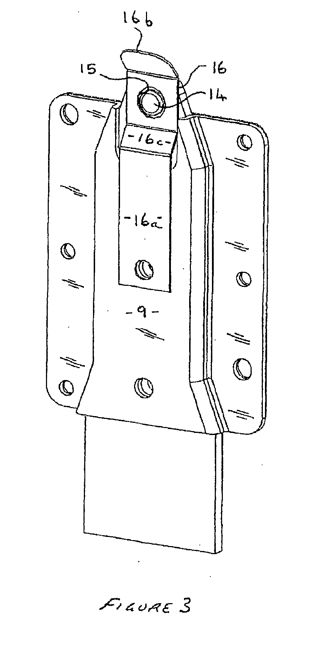

In the assembled condition shown in Figure 2, it will be apparent that disassembly of the tang 2 from the bracket 3 can occur by simply sliding movement with respect to each other and in order to avoid this happening accidentally a through-bore 13 is provided at the leading end of the tang 2 for receiving a locking formation in the form of a flanged spigot 14, as shown in Figure 3. The flanged end of the spigot 14 is itself received within a correspondingly shaped bore 15 of a swan-neck shaped spring clip 16 having a lower end 16a secured by e.g. spot welding, to the outside of the sleeve or channel 9. The spring clip 16 includes a rounded free end 16b by which the clip 16 can be lifted off the flanged spigot 14 and a tapered mid section 16c by which the spring clip 16 can ride over the spigot 14 when the tang 2 is being inserted into the sleeve or bracket 9 when the connector 1 is assembled.

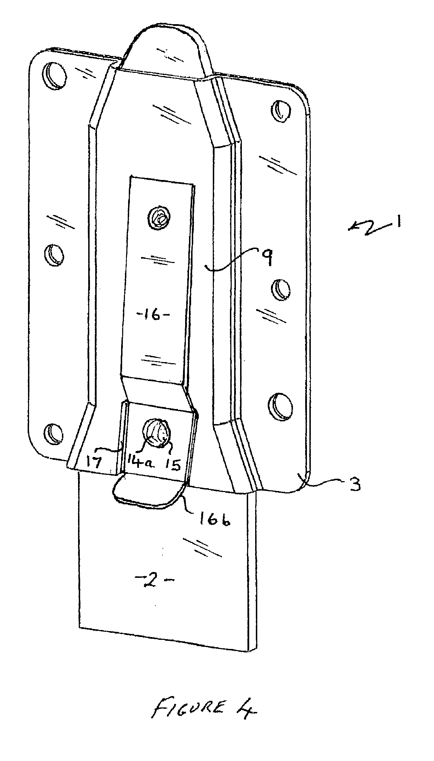

In the embodiment shown in Figure 4, where like parts are numbered identically, the spring clip 16 is shown positioned in an orientation exactly opposite to that shown in Figure 3 i.e. turned around by 180°, with the spring clip bore 15 being received by a spigot 14a extending from a mid portion of the tank 2 around its shoulders 6, the sleeve or channel 9 in this case having a cut out portion 17 in this region. The arrangements shown in Figures 3 and 4 therefore provide alternative ways of releasably securing the tang 2 to the channelled bracket 3 to thereby selectively minimise the risk of the free end 16b catching against e.g. upholstery as the connector 1 is assembled.

In another embodiment, not shown, the spring clip 16 may be provided with a stud releasably biased to be received within a correspondingly shaped bore within the tang 2.

The invention therefore provides the benefits of using tapered edges or formations which enable the respective parts of the connector assembly 1 to be easily guided and assembled with respect to each other, whereafter the tapers themselves substantially bear the generally vertical mechanical loads required of the connector assembly when assembled, whereas any generally horizontal loads are substantially transferred to and borne by the parallel edges and formations of the tang 2 and the sleeve or channel 9 of the bracket 3. Because the various tapers may therefore be more blunt than heretofore, they carry substantially no lateral load bearing function, and are correspondingly less likely to become jammed with respect to each other. However, they are still tapered sufficiently to act as guides for initially connecting adjacent elements, such as chairs and armrests to each other, whereafter they become releasably locked together.

## Claims

1. A connector assembly (1) comprising or including a tang (2) adapted to be secured to a first element and a correspondingly shaped channelled bracket (3) adapted to be secured to a second element, the tang being tapered bluntly (4) inwardly at its leading end, being substantially parallel in its mid portion (5), and being tapered bluntly (6) outwardly at its end remote from its leading end, the arrangement being such that the inwardly facing taper of the tang is adapted to be received initially within the outwardly tapered (12) channelled bracket, which thereafter guides the tang into the channel up to the limit imposed (10, 12) by the presence of the outwardly extending part of the tang as it is received within the correspondingly shaped part of the bracket.

2. A connector assembly according to claim 1 further **characterised in that** each taper is at or around 20° to the vertical relative to a vertically disposed connector assembly.

3. A connector assembly according to claim 1 or claim 2 further **characterised in that** the locking formations (14, 15, 16) are provided on or in the tang or bracket by which the tang may be releasably secured to the bracket when the first and second elements are connected together.

4. A connector assembly according to claim 3 further **characterised in that** the locking formations are in the form of a spring clip (16) forming part of the bracket and include a bore (15) into which a correspondingly shaped stud (14) on part of the tang, such as at or near its leading end, may be received when the tang is fully inserted into the bracket, the arrangement being such that, for disassembly, part of the spring clip is lifted away from the tang and hence the stud (14) to thereafter release the tang (2) for removal from the bracket (3) by being slid along the major axis of the bracket (3).

5. Furniture having one or more detachable parts interconnected by a connector assembly according to any preceding claim.

## Patentansprüche

1. Verbinderanordnung (1), umfassend oder aufweisend einen Mitnehmer (2), der an einem ersten Element befestigt werden kann, und einen entsprechend geformten, gerillten Arm (3), der an einem zweiten Element befestigt werden kann, wobei sich der Mitnehmer an seinem vorderen Ende kegelstumpfförmig nach innen verjüngt, in seinem Mittelteil (5) im wesentlichen parallel ausgebildet ist und an seinem Ende, das von seinem vorderen entfernt liegt, kegelstumpfförmig (6) nach außen geformt ist, wobei ferner die Anordnung so gartet ist, daß die nach innen gerichtete Abschrägung des Mitnehmers anfänglich in dem nach außen abgeschrägten (12), geriffelten Arm aufgenommen werden kann, der danach den Mitnehmer in die durch die Riffelung gebildete Rinne bis zu der Begrenzung führt, die durch das Vorhandensein des sich nach außen erstreckenden Teils des Mitnehmers gebildet wird (10, 12), wenn der Mitnehmer in dem entsprechend geformten Teil des Arms aufgenommen wird.

2. Verbinderanordnung nach Anspruch 1, ferner **dadurch gekennzeichnet, daß** jede Abschrägung bei 20 ° oder rund 20 ° zur Senkrechten bezüglich der senkrecht verlaufenden Verbinderanordnung liegt.

3. Verbinderanordnung nach Anspruch 1 oder Anspruch 2, ferner **dadurch gekennzeichnet, daß** auf oder in dem Mitnehmer oder Arm Verriegelungsausbildungen (14, 15, 16) vorgesehen sind, durch die der Mitnehmer an dem Arm lösbar befestigt werden kann, wenn das erste und das zweite Element miteinander verbunden sind.

4. Verbinderanordnung nach Anspruch 3, ferner **dadurch gekennzeichnet, daß** die Verriegelungsausbildungen die Form einer Federspange (16) haben, die Teil des Arms ist und eine Bohrung (15) aufweist, in die ein entsprechend geformter Zapfen (14) als Teil des Mitnehmers beispielsweise an oder in der Nähe ihres vorderen Endes aufgenommen werden kann, wenn der Mitnehmer vollständig in den Arm hineingesteckt wird, wobei die Anordnung so getroffen ist, daß zwecks Demontage ein Teil der Federspange von dem Mitnehmer und damit dem Zapfen (14) abgehoben wird, um danach den Mitnehmer (2) zu lösen und von dem Arm (3) zu entfernen, und zwar durch Verschieben entlang der Achse des Arms (3).

5. Möbelstück mit einem oder mehreren abbaubaren Teilen, die durch eine Verbindungsanordnung gemäß einem beliebigen vorhergehenden Anspruch miteinander verbunden sind.

## Revendications

1. Ensemble raccord (1) comprenant ou incluant un tenon (2) apte à être fixé à un premier élément et un support à canal de forme correspondante (3) apte à être fixé à un second élément, le tenon étant franchement effilé (4) vers l'intérieur à son extrémité avant, étant sensiblement parallèle dans sa partie centrale (5) et étant franchement effilé (6) vers l'extérieur à son extrémité à distance de son extrémité avant, l'agencement étant tel que l'effilement tourné vers l'intérieur du tenon est apte à être reçu initialement à l'intérieur du support à canal (12) effilé vers l'extérieur, lequel guide ensuite le tenon dans le canal jusqu'à la limite imposée (10, 12) par la présence de la partie s'étendant vers l'extérieur du tenon lorsqu'il est reçu dans la partie de forme correspondante du support.

2. Ensemble raccord selon la revendication 1, **caractérisé en outre par le fait que** chaque effilement est de 20° ou approximativement de 20° par rapport à la verticale relativement à un ensemble raccord disposé verticalement.

3. Ensemble raccord selon l'une des revendications 1 ou 2, **caractérisé en outre par le fait que** les formations de verrouillage (14, 15, 16) sont prévues sur ou dans le tenon ou le support, par lesquelles le tenon peut être fixé de façon libérable au support lorsque les premier et second éléments sont reliés ensemble.

4. Ensemble raccord selon la revendication 3, **caractérisé en outre par le fait que** les formations de verrouillage se présentent sous la forme d'une attache à ressort (16) faisant partie du support et comprennent un alésage (15) dans lequel un goujon de forme correspondante (14) sur une partie du tenon, telle qu'à ou près de son extrémité avant, peut être reçu lorsque le tenon est entièrement introduit dans le support, l'agencement étant tel que, pour le démontage, une partie de l'attache à ressort est soulevée à l'opposé du tenon, et donc du goujon (14), pour libérer ensuite le tenon (2) pour un retrait à partir du support (3) par coulissement le long de l'axe majeur du support (3).

5. Meuble ayant une ou plusieurs pièces détachables reliées entre elles par un ensemble raccord selon l'une quelconque des revendications précédentes.
